# FASCICULE DE BREVET EUROPEEN

(11) **EP 3 651 370 B1**
(45) Date de publication et mention de la délivrance du brevet: **29.06.2022**
(21) Numéro de dépôt: 19207725.3
(22) Date de dépôt: 07.11.2019
(51) Int. Cl.: H04B 1/10, H04W 4/00, H04W 40/22

(54) **PROCÉDÉ DE CONTRÔLE DU FONCTIONNEMENT D'UN RÉSEAU DE COMMUNICATION ET DISPOSITIFS ASSOCIÉS**
KONTROLLVERFAHREN DER FUNKTIONSWEISE EINES KOMMUNIKATIONSNETZES, UND ENTSPRECHENDE VORRICHTUNGEN
METHOD FOR CONTROLLING THE OPERATION OF A COMMUNICATION NETWORK AND ASSOCIATED DEVICES

(30) Priorité: 07.11.2018 FR 1801167
(43) Date de publication de la demande: 13.05.2020
(73) Titulaire: Thales, 92400 Courbevoie (FR); Institut National Polytechnique de Toulouse, 31400 Toulouse (FR); Centre National de la Recherche Scientifique, 75016 Paris (FR)
(72) Inventeur: NAVES, Raphaël, 92230 GENEVILLIERS (FR); KHALIFE, Hicham, 92230 GENEVILLIERS (FR); CONAN, Vania, 92230 GENEVILLIERS (FR); JAKLLARI, Gentian, 31071 TOULOUSE CEDEX 7 (FR); BEYLOT, André-Luc, 31071 TOULOUSE CEDEX 7 (FR)
(74) Mandataire: Lavoix

(56) Documents cités:
- EP-A1- 2 091 188
- US-A1- 2010 020 740
- US-A1- 2018 184 360

## Description

La présente invention concerne un procédé de contrôle du fonctionnement d'un réseau de communication sans-fil. L'invention se rapporte également à un réseau de communication, un produit programme d'ordinateur et un support lisible d'informations.

Dans le domaine des télécommunications sans-fil, le réseau de communication entre un premier nœud et un deuxième nœud avec deux sauts et deux relais est un réseau se retrouvant dans de nombreuses architectures.

En fonctionnement, dans le premier intervalle de temps (aussi appelé slot), le premier nœud du réseau de communication émet un message que le relais écoute puis le relais transmet le message au deuxième nœud, dans le deuxième slot de temps. La transmission d'un message du premier nœud au deuxième nœud se fait donc au cours de deux intervalles de temps. Cela correspond à un débit (quantité d'information transmise par unité de temps) correspondant à 0,5 message par slot.

Pour beaucoup d'applications, il convient d'augmenter ce débit.

Il est notamment connu de l'article de Vijia FAN et al. intitulé « Recovering Multiplexing Loss Through Successive Relaying Using Repetition Coding » (IEEE Transactions on Wireless Communications, Vol. 6, No. 12, Décembre 2007) un protocole de transmission permettant une augmentation du débit.

Il est aussi connu du document EP 2 091 188 A1 un protocole sans fil à plusieurs sauts pour la même finalité.

Toutefois, une telle augmentation du débit est encore insuffisante.

Il existe donc un besoin pour un procédé de contrôle de fonctionnement d'un réseau de communication permettant d'obtenir un débit plus important tout en garantissant une bonne réception des messages.

A cet effet, la description décrit un procédé de contrôle du fonctionnement d'un réseau de communication, le réseau comportant une source reliée par deux relais à un nœud de destination, le fonctionnement étant défini par un mode d'émission du réseau de communication et un mode de réception pour chaque relais, le procédé comportant la détection du mode de réception de chaque relais du réseau de communication. Le mode de réception d'un relais étant un premier mode de réception dans lequel le relais considéré est propre à recevoir des messages provenant de la source sans mise en œuvre d'une technique de gestion des interférences ou un deuxième mode de réception dans lequel le relais considéré est propre à recevoir les messages provenant de la source après mise en œuvre d'une technique de gestion des interférences, ou un troisième mode de réception dans lequel le relais considéré n'est pas propre à recevoir des messages provenant de la source même après mise en œuvre d'une technique de gestion des interférences. Le procédé comporte également le contrôle du mode d'émission du réseau de communication en fonction du mode de réception détecté pour chacun des deux relais.

Selon des modes de réalisation particuliers, le procédé présente une ou plusieurs des caractéristiques suivantes, prise(s) isolément ou selon toutes les combinaisons techniquement possibles :
- la détection du mode de réception de chaque relais est obtenue à l'aide d'au moins une mesure de rapport signal à bruit.
- la mesure de rapport signal à bruit est le rapport signal à bruit entre un signal provenant de la source et le bruit d'un relais ou le rapport signal à bruit entre un signal provenant d'un relais et le bruit d'un autre relais.
- le procédé comporte une étape de prise de connaissance par la source des modes de réception des deux relais.
- la technique de gestion des interférences est un décodage PLNC.
- le procédé comporte l'adaptation de la puissance de la source lorsque le mode de réception est le deuxième mode de réception.
- lors de l'étape de contrôle, le mode d'émission du réseau de communication présente un débit de 1 trame par slot lorsque le réseau de communication est dans le troisième mode d'émission et le réseau de communication présente un débit de 2/3 d'une trame par slot lorsque le réseau de communication est dans le deuxième mode d'émission.

La présente description propose également un réseau de communication comportant une source, un nœud de destination, deux relais reliant la source au nœud de destination, et quatre contrôleurs, chaque contrôleur étant associé respectivement à la source, au nœud de destination et aux deux relais, les quatre contrôleurs étant adaptés à contrôler le fonctionnement du réseau de communication, le fonctionnement étant défini par un mode d'émission pour le réseau de communication et un mode de réception pour chaque relais, et détecter le mode de réception de chaque relais du réseau de communication. Le mode de réception d'un relais étant un premier mode de réception dans lequel le relais considéré est propre à recevoir des messages provenant de la source sans mise en œuvre d'une technique de gestion des interférences ou un deuxième mode de réception dans lequel le relais considéré est propre à recevoir les messages provenant de la source après mise en œuvre d'une technique de gestion des interférences, ou un troisième mode de réception dans lequel le relais considéré n'est pas propre à recevoir des messages provenant de la source même après mise en œuvre d'une technique de gestion des interférences. Les quatre contrôleurs étant adaptés à contrôler le mode d'émission du réseau de communication en fonction du mode de réception détecté pour chacun des deux relais.

La présente description propose également un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'au moins une étape du procédé tel que précédemment décrit lorsque le programme d'ordinateur est mis en œuvre sur l'unité de traitement des données.

La présente description propose également un support lisible d'informations comportant des instructions de programme formant un programme d'ordinateur, le programme d'ordinateur étant chargeable sur une unité de traitement de données et adapté pour entraîner la mise en œuvre d'étapes d'un procédé tel que précédemment décrit lorsque le programme d'ordinateur est mis en œuvre sur l'unité de traitement de données.

Des caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue schématique d'un exemple de réseau de communication sans-fil,
- la figure 2 est un graphe délimitant les modes de réception au niveau de chaque relais du réseau de communication de la figure 1 en fonction des rapports signal à bruit d'éléments du réseau,
- la figure 3 est une représentation schématique d'un exemple de fonctionnement du réseau de communication de la figure 1 selon un premier mode d'émission,
- la figure 4 est une représentation schématique d'un exemple de fonctionnement du réseau de communication de la figure 1 selon un deuxième mode d'émission,
- la figure 5 est une représentation schématique d'un exemple de fonctionnement du réseau de communication de la figure 1 selon un troisième mode d'émission,
- la figure 6 est un organigramme d'un exemple de procédé de contrôle du fonctionnement du réseau de communication de la figure 1,
- la figure 7 est un graphique montrant les performances du procédé de contrôle lors d'une séquence de mise en œuvre d'au moins une partie du procédé de contrôle proposé à la figure 6, et
- la figure 8 est un graphique montrant les performances du procédé de contrôle en termes de taux d'erreur pour plusieurs techniques de discrimination de signaux.

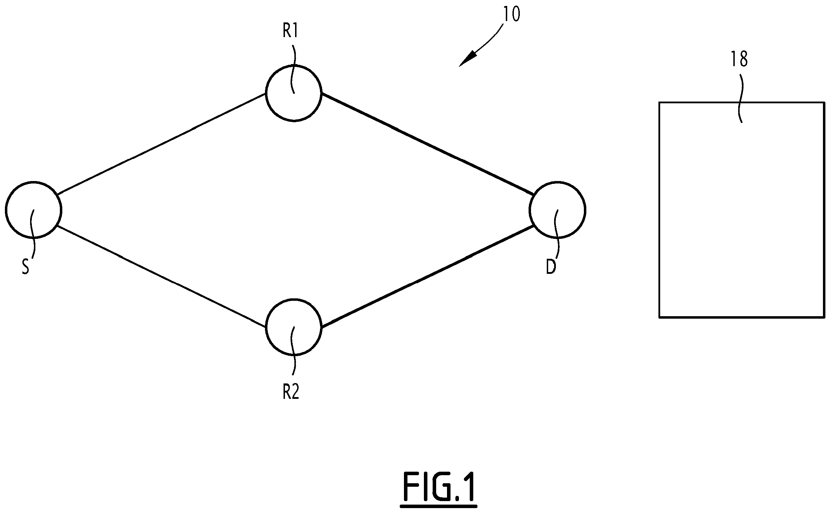

Un réseau de communication 10 est représenté schématiquement sur la figure 1. Le réseau de communication 10 sert à envoyer des messages depuis un premier nœud vers un deuxième nœud.

Le premier nœud est, de ce fait, appelé la source S dans ce qui suit tandis que le deuxième nœud est appelé nœud de destination D ou destination D.

Le réseau de communication 10 peut faire partie d'un ensemble de nœuds plus grand, l'ensemble formant alors un ensemble plus grand de nœud, aussi appelé une topologie multi-sauts ou une architecture.

Dans l'exemple proposé, le réseau de communication 10 comporte seulement quatre nœuds - la source S, la destination D et les deux relais R1 et R2 - et un contrôleur par nœud. Par commodité, le contrôleur est représenté par un seul rectangle 18.

La nature des nœuds est indifférente pour l'exposé qui suit. Par exemple, un nœud est, selon les cas, un terminal mobile, un terminal fixe ou une borne d'émission.

Chaque relais R1 ou R2 est intercalé entre la source S et la destination D.

Chaque relais R1 ou R2 est propre à recevoir un message provenant de la source S et à émettre un message, notamment en direction de la destination D.

Chaque contrôleur 18 est adapté pour contrôler le nœud du réseau de communication 10 auquel il est rattaché selon plusieurs modes de fonctionnement.

Un mode de fonctionnement du réseau de communication 10 est défini par un mode d'émission définissant un ordonnancement des transmissions pour chaque nœud et un mode de réception au niveau de chaque relais R1 ou R2. Les modes d'émission et modes de réceptions au niveau de chaque relais R1 ou R2 possibles pour le réseau de communication 10 sont décrits dans la suite.

Chaque contrôleur 18 peut être réalisé de différentes manières.

Dans un exemple particulier, l'interaction d'un ou plusieurs produits programme d'ordinateur avec chaque contrôleur 18 permet de mettre en œuvre un procédé de contrôle du fonctionnement du réseau de communication 10.

Plus généralement, chaque contrôleur 18 est un calculateur électronique propre à manipuler et/ou transformer des données représentées comme des quantités électroniques ou physiques dans des registres du calculateur et/ou des mémoires en d'autres données similaires correspondant à des données physiques dans des mémoires, des registres ou d'autres types de dispositifs d'affichage, de transmission ou de mémorisation.

Dans un cas très particulier, chaque contrôleur 18 comporte un processeur comprenant une unité de traitement de données, des mémoires et un lecteur de support d'informations. Le contrôleur 18 comprend également un clavier et une unité d'affichage.

Le produit programme d'ordinateur comporte un support lisible d'informations.

Un support lisible d'informations est un support lisible par chaque contrôleur 18, usuellement par le lecteur. Le support lisible d'informations est un médium adapté à mémoriser des instructions électroniques et capable d'être couplé à un bus d'un système informatique.

A titre d'exemple, le support lisible d'informations est une disquette ou disque souple (de la dénomination anglaise de « *floppy disk* »), un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations est mémorisé un programme d'ordinateur comprenant des instructions de programme.

Le programme d'ordinateur est chargeable sur l'unité de traitement de données et est adapté pour entraîner la mise en œuvre du procédé de contrôle.

Selon un autre exemple, chaque contrôleur 18 est réalisé sous forme d'une pluralité de calculateurs contrôlés à distance par un organe de supervision.

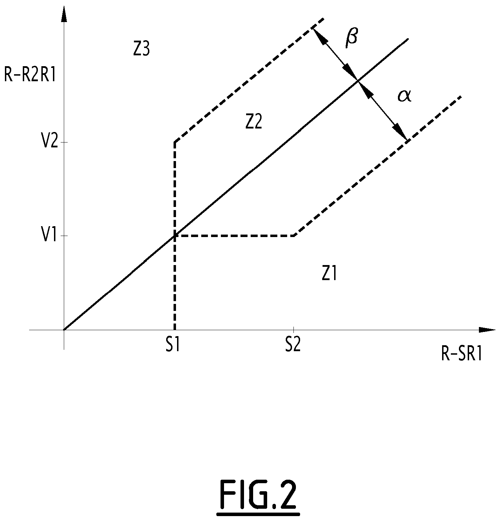

Chaque relais R1 ou R2 du réseau de communication 10 est propre à fonctionner selon plusieurs modes de réception MR1, MR2 et MR3 distincts comme illustré schématiquement par la figure 2.

Dans la figure 2, chaque mode de réception MR1, MR2 et MR3, appliqué au niveau du premier relais R1, correspond à une zone Z1, Z2 et Z3, chaque zone Z1, Z2 et Z3 étant définie dans l'espace du rapport signal à bruit du premier relais R1 pour un signal provenant de la source S (axe des abscisses) et du rapport signal à bruit du premier relais R1 pour un signal provenant du deuxième relais R2 (axe des ordonnées).

Similairement, chaque mode de réception MR1, MR2 et MR3, appliqué au niveau du deuxième relais R2, correspond à une zone Z1, Z2 et Z3, chaque zone Z1, Z2 et Z3 étant définie dans l'espace du rapport signal à bruit du deuxième relais R2 pour un signal provenant de la source S (axe des abscisses) et du rapport signal à bruit du deuxième relais R2 pour un signal provenant du deuxième relais R1 (axe des ordonnées).

Il est à noter que le mode de réception appliqué au niveau du premier relais R1 est indépendant du mode de réception appliqué au deuxième relais R2.

Le rapport signal à bruit du premier relais R1 pour un signal provenant de la source S correspond au rapport entre le niveau de puissance du signal provenant de la source S reçu par le premier relais R1 et le niveau de bruit des interférences électromagnétiques ambiantes au niveau du premier relais R1.

De manière similaire, le rapport signal à bruit du premier relais R1 pour un signal provenant du deuxième relais R2 correspond au rapport entre le niveau de puissance du signal provenant du deuxième relais R2 reçu par le premier relais R1 et le niveau de bruit des interférences électromagnétiques ambiantes au niveau du premier relais R1.

Les rapports signal à bruit du deuxième relais R2 pour un signal en provenance de la source S ou pour un signal provenant du premier relais R1 sont définis de manière similaire, en inversant les rôles du premier relais R1 et du deuxième relais R2.

Dans la suite, par commodité, le rapport signal à bruit du premier relais R1 pour un signal provenant de la source S est appelé rapport source-R1 et noté R-SR1 tandis que le rapport signal à bruit du premier relais R1 pour un signal provenant du deuxième relais R2 est appelé rapport R2-R1 et noté R-R2R1.

De même, le rapport signal à bruit du deuxième relais R2 pour un signal provenant de la source S est appelé rapport source-R2 R-SR2 tandis que le rapport signal à bruit du deuxième relais R2 pour un signal provenant du premier relais R1 est appelé rapport R1-R2 et noté R-R1R2.

En outre, les notions de positionnement relatifs sur le graphique de la figure 2, sont entendues de sorte qu'un rapport R-SR1 plus grand correspond à une position plus vers la droite et qu'un rapport R-R2R1 plus grand correspond à une position plus haute. Ceci ne préjuge de la position relative des deux relais R1 et R2.

Pour chaque relais R1 ou R2, les zones Z1, Z2 et Z3 sont délimitées par un ensemble de segments.

En prenant l'exemple du premier relais R1, la première zone Z1 correspond à des configurations pour lesquelles le rapport R-SR1 est supérieur à un premier seuil S1 et pour lesquelles le rapport R-R2R1 est inférieur à une première valeur V1 tant que le rapport R-SR1 est inférieur à un deuxième seuil S2. La première zone Z1 regroupe aussi les configurations dans lesquelles le rapport deuxième relais RR2 est inférieur ou égal à la somme du rapport R-SR1 et de la première valeur V1 diminuée du deuxième seuil S2.

La première zone Z1 est donc délimitée par trois segments, un premier segment d'équation R-SR1 = S1, un deuxième segment d'équation R-R2R1 = V1 et un troisième segment d'équation R-R2R1 = R-SR1 + (V1-S2). La première zone Z1 est en-dessous de ces trois segments.

D'un point de vue physique, le premier R1 se situe dans la première zone Z1 quand le premier relais R1 est capable de décoder directement (décodage classique) le message provenant de la source S, même si le deuxième R2 envoie simultanément un message à la destination.

En inversant les rôles du premier relais R1 et du deuxième relais R2, le raisonnement vaut également pour le deuxième relais R2. Le deuxième relaisR2 se situe dans la première zone Z1 (relativement aux rapports signal à bruit R-SR2 et R-R1R2), si le deuxième relais R2 est capable de décoder directement le message en provenance de la source quand le première relais R1 est actif simultanément.

Autrement formulé, le premier mode de réception MR1 est un mode dans lequel les deux relais R1 et R2 reçoivent et décodent directement les messages venant de la source, même si le relais complémentaire est actif simultanément.

La deuxième zone Z2 et la troisième zone Z3 regroupent les configurations situées au-dessus des segments précités.

La deuxième zone Z2 est délimitée de la troisième zone Z3 par un quatrième segment et un cinquième segment.

Toujours pour le cas du relais R1, le quatrième segment est dans la continuité du premier segment d'équation R-SR1 = S1 et est situé entre des valeurs du rapport deuxième relais R-R2R1 situées entre la première valeur V1 et une deuxième valeur V2.

Le cinquième segment est parallèle au troisième segment et début au point ayant pour coordonnées le premier seuil S1 et la deuxième valeur V2.

La deuxième zone Z2 est délimitée en-dessous par le deuxième segment et le troisième segment et au-dessus par le quatrième segment et le cinquième segment.

D'un point de vue physique, la deuxième zone Z2 relative au premier relais R1 correspond au cas où le premier relais R1 reçoit des signaux en provenance de la source S et du deuxième relais R2 avec une puissance similaire. Dans cette situation, le premier relais R1 ne peut pas décoder directement les messages provenant de la source si le deuxième relais R2 est actif simultanément. Néanmoins, le premier R1 peut retrouver une combinaison linéaire des deux messages transmis (par la source S et par le deuxième R2) à l'aide d'une technique de décodage particulière, dite technique de gestion des interférences.

Par exemple, le décodage spécifique est un décodage dit PLNC pour l'expression anglaise « Physical Layer Network Coding » signifiant littéralement « Codage de couche physique d'un réseau ».Selon un autre exemple, la technique d'annulations successives d'interférences souvent désignée sous le terme anglais de « Successive Interference Cancellation» sous son abréviation SIC est également une technique de gestion des interférences à appliquer au niveau des relais R1 ou R2. C'est notamment le cas dans l'article de Simoni intitulé "Buffer-Aided Diamond Relay Network With Block Fading and Inter-Relay Interference", (IEEE Transactions on Wireless Communications, Vol. 15, No. 11, Novembre 2016) ou dans l'article de Fan intitulé "Recovering Multiplexing Loss Through Successive Relaying Using Répétition Coding" (IEEE Transactions on Wireless Communications, Vol. 6, No. 12, Décembre 2007).

La deuxième zone Z2 relative au deuxième relais R2 est construite de manière similaire en inversant les rôles du premier relais R1 et du deuxième relais R2. Le deuxième relais R2 se situe dans la deuxième zone Z2 si le deuxième relais R2 reçoit le signal provenant de la source S et le signal provenant du premier relais R1 avec des puissances similaires.

La troisième zone Z3 est délimitée à droite par le premier segment, le quatrième segment et le cinquième segment.

La troisième zone Z3 relative au premier relais R1 correspond aux configurations dans lesquelles le premier relais R1 ne peut pas recevoir le signal provenant de la source S si le deuxième relais R2 transmet simultanément un message, quelle que soit la technique de décodage utilisée. D'un point de vue physique, la puissance provenant du deuxième relais R2 est trop supérieure à la puissance provenant de la source S pour que le premier relais R1 puisse décoder le message de la source S.

De manière similaire, le deuxième R2 se situe dans la troisième zone Z3 si la puissance du signal venant du premier relais R1 nettement supérieure à celle provenant de la source S.

De manière synthétique, il est possible de définir chaque mode de réception d'un relais R1 ou R2 comme suit.

Le premier mode de réception MR1 est un mode de réception dans lequel le relais R1 ou R2 considéré est propre à recevoir et lire des messages provenant de la source S à destination du relais R1 ou R2 considéré sans mise en œuvre d'une technique de gestion des interférences.

Le deuxième mode de réception MR2 est un mode de réception dans lequel le relais R1, R2 considéré est propre à recevoir et lire des messages provenant de la source S à destination du relais R1 ou R2 considéré après mise en œuvre d'une technique de gestion des interférences.

Le troisième mode de réception MR3 est un mode de réception dans lequel le relais R1 ou R2 considéré n'est pas propre à lire des messages provenant de la source S à destination du relais R1 ou R2 considéré même après mise en œuvre d'une technique de gestion des interférences.

Il est à noter que c'est bien la capacité du relais R1 et R2 à lire le message provenant de la source qui est déterminante et non la question de savoir si le relais R1 et R2 met effectivement en œuvre la technique de gestion des interférences. En particulier, le relais R1 ou R2 peut mettre en œuvre d'une technique de gestion des interférences dans la première zone Z1 même si cette technique est inutile.Il est également défini deux paramètres α et β. Pour l'espace des puissances reçues par le premier relais R1 le premier paramètre α étant la distance entre le troisième segment et la courbe d'équation R-R2R1=R-SR1 alors que le deuxième paramètre β est la distance entre le cinquième segment et la courbe d'équation R-R2R1 =R-SR1.

Les paramètres α et β permettent notamment de définir la largeur des trois zones Z1, Z2 et Z3. Plus les valeurs des paramètres α et β sont faibles, plus la deuxième zone Z2 est réduite au profit des première et troisième zones Z1 et Z3. A l'inverse, plus les valeurs des paramètres α et β sont élevées, plus la deuxième zone Z2 est large et plus les relais R1 et R2 effectueront un décodage PLNC.

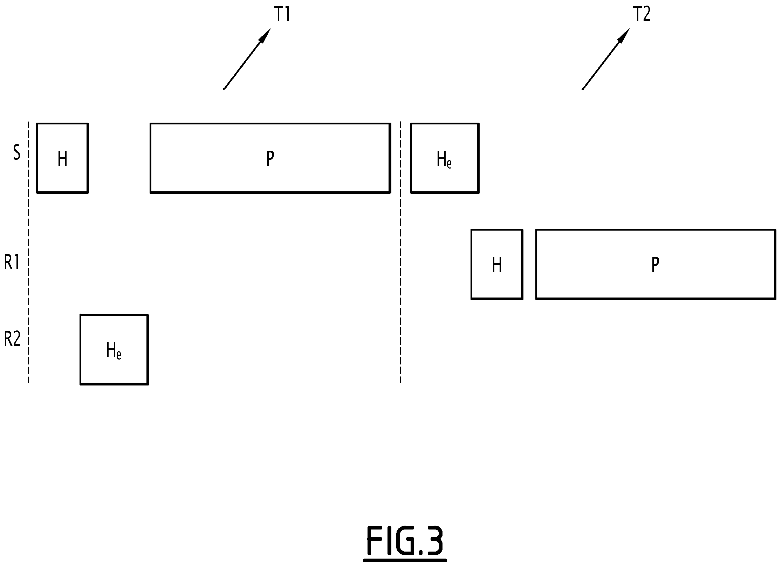

Les modes d'émission possibles pour le réseau de communication 10 sont maintenant décrits en référence aux figures 3 à 5.

Le premier mode d'émission ME1 du réseau de communication 10 est illustré schématiquement par la figure 3 qui montre l'ordonnancement des transmissions entre les éléments du réseau de communication 10 dans deux intervalles de temps T1 et T2 (aussi désignés sous le terme de « slot »).

Dans ce premier mode d'émission ME1, la source S émet d'abord un premier message de configuration en direction des deux relais R1 et R2 selon un mode broadcast. Le terme « broadcast » est souvent traduit par le terme français « multidiffusion » et s'oppose à une diffusion point à point. Puis, le deuxième relais R2 émet un deuxième message de configuration à destination de la source S. Ensuite, la source S émet un message de donnée au premier relais R1.

Le message de donnée est émis avant la fin du premier intervalle de temps T1.

Puis, lors du deuxième intervalle de temps T2, la source S émet le deuxième message de configuration en direction des deux relais R1 et R2. Ensuite, le premier relais R1 émet une trame complète, à savoir le premier message de configuration et le message contenant la donnée. Le message contenant la donnée est reçu par la destination D.

Un tel premier mode d'émission ME1 correspond ainsi à un débit de 1 trame pour deux intervalles de temps soit un débit de 0,5 trame par intervalle de temps.

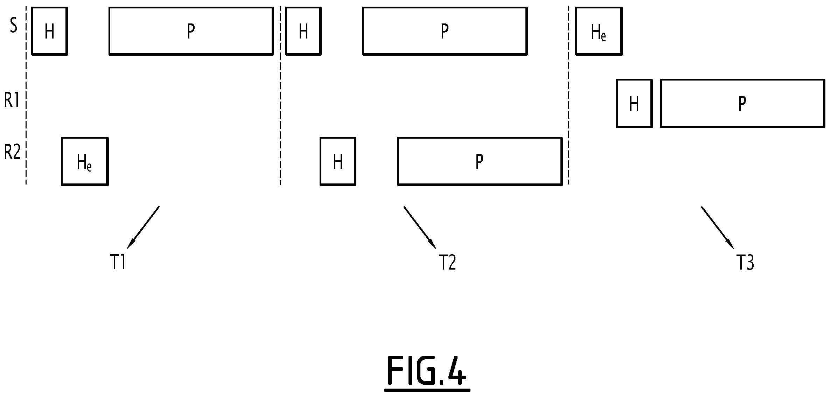

L'ordonnancement des transmissions entre les éléments du réseau de communication 10 dans trois intervalles de temps T1, T2 et T3 est aussi représenté dans la figure 4 pour le cas du deuxième mode d'émission ME2.

Dans ce deuxième mode d'émission ME2, la source S émet d'abord un premier message de configuration en direction des deux relais R1 et R2. Puis, le deuxième relais R2 émet un deuxième message de configuration à destination de la source S. Ensuite, la source S émet un message à transmettre au deuxième relais R2.

Le premier message à transmettre est émis avant la fin du premier intervalle de temps T1.

Puis, lors du deuxième intervalle de temps T2, la source S émet un deuxième message de configuration à destination des deux relais R1 et R2. Ensuite, le deuxième relais R2 émet le premier message de configuration. Puis, simultanément, le deuxième relais R2 émet le premier message à transmettre alors que la source S émet le deuxième message à transmettre au premier relais R1.

Le deuxième message à transmettre est émis avant la fin du deuxième intervalle de temps T2.

Ensuite, le deuxième message de configuration est émis par la source S. Le premier relais R1 émet alors une trame complète, à savoir le premier message de configuration et le deuxième message à transmettre.

Un tel deuxième mode d'émission ME2 correspond ainsi à un débit de 2 trames pour 3 intervalles de temps soit un débit de 2/3 trame par intervalle de temps.

Un mode d'émission équivalent, appelé deuxième-bis et noté ME2-bis, peut être défini en inversant les rôles du premier relais R1 et du deuxième relais R2.

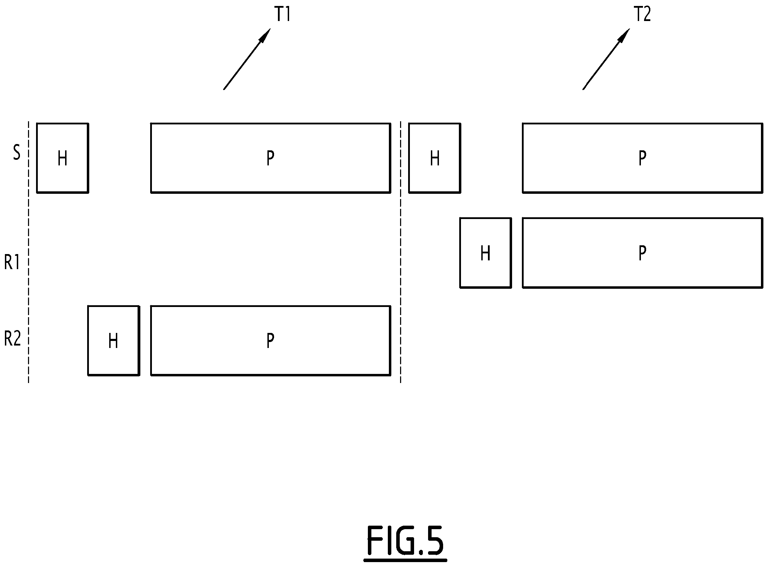

Pour le troisième mode d'émission ME3, la figure 5 illustre un ordonnancement pour la transmission des messages au sein des éléments du réseau de communication 10 pendant deux intervalles de temps.

Dans ce troisième mode d'émission ME3, la source S émet d'abord un premier message de configuration à destination des deux relais R1 et R2. Puis, le deuxième relais R2 émet un deuxième message de configuration. La source S émet ensuite un message à transmettre tandis que le deuxième relais R2 transmet un autre message à transmettre provenant de la source S (intervalle de temps antérieur aux intervalles de temps représentés).

A la fin de la transmission et de l'émission des messages, le premier intervalle de temps T1 se termine.

Puis, lors du deuxième intervalle de temps T2, la source S émet un deuxième message de configuration à destination du deuxième relais R2. Le premier relais R1 transmet ensuite le premier message de configuration. Enfin, simultanément, la source S émet un deuxième message à transmettre en direction du deuxième relais R2 et le premier relais R1 envoie le premier message à transmettre.

Le troisième mode d'émission ME3 correspond ainsi à un débit de 2 trames pour 2 intervalles de temps soit 1 trame par intervalle de temps.

Selon l'exemple proposé, la première étape du procédé de contrôle de fonctionnement du réseau de communication 10 consiste à détecter les modes de réception MR1, MR2 ou MR3des deux relais R1 et R2. Au niveau du premier relais R1 par exemple, une telle détection est, par exemple, mise en œuvre par mesure des rapports signaux à bruit source S et deuxième relais R2 calculés lors de la réception des messages de configuration. Chaque relais R1 ou R2 peut alors estimer la zone Z1, Z2 ou Z3 dans laquelle ledit relais R1 ou R2 se situe et choisir le mode de réception MR1, MR2 ou MR3 associé.

Le procédé contrôle ensuite le mode d'émission du réseau de communication 10 en fonction du mode de réception MR1, MR2 et MR3 détecté pour chacun des deux relais R1 et R2.

Selon l'exemple décrit, les relais R1 et R2 communiquent à la source S dans les messages de configuration leur capacité à recevoir le message de la source S si l'autre relais R1 ou R2 transmet simultanément un message à la destination D.

Par exemple, dans le cas du premier relais R1, le premier relais R1 annonce à la source S dans les paquets de configuration que le premier relais R1 est capable de gérer la réception de deux signaux reçus simultanément si le premier relais R1 se situe dans la première zone Z1 ou dans la deuxième zone Z2. A contrario, si le premier relais R1 se situe dans la troisième zone Z3, le premier relais R1 annonce à la source S que le premier relais R1 ne peut pas décoder deux paquets.

Les capacités de décodage au niveau des relais R1 ou R2 pouvant évoluer (déplacement des nœuds par exemple), le procédé de contrôle du fonctionnement du réseau de communication 10 permet ainsi de gérer au mieux les basculements entre les différents modes d'émission en fonction du mode de réception MR1, MR2 et MR3 du réseau de communication 10 pour assurer de bénéficier du meilleur débit tout en ne générant pas des oscillations du réseau de communication 10 par exemple dans le cas d'une configuration où le réseau de communication 10 serait dans un mode puis dans un autre.

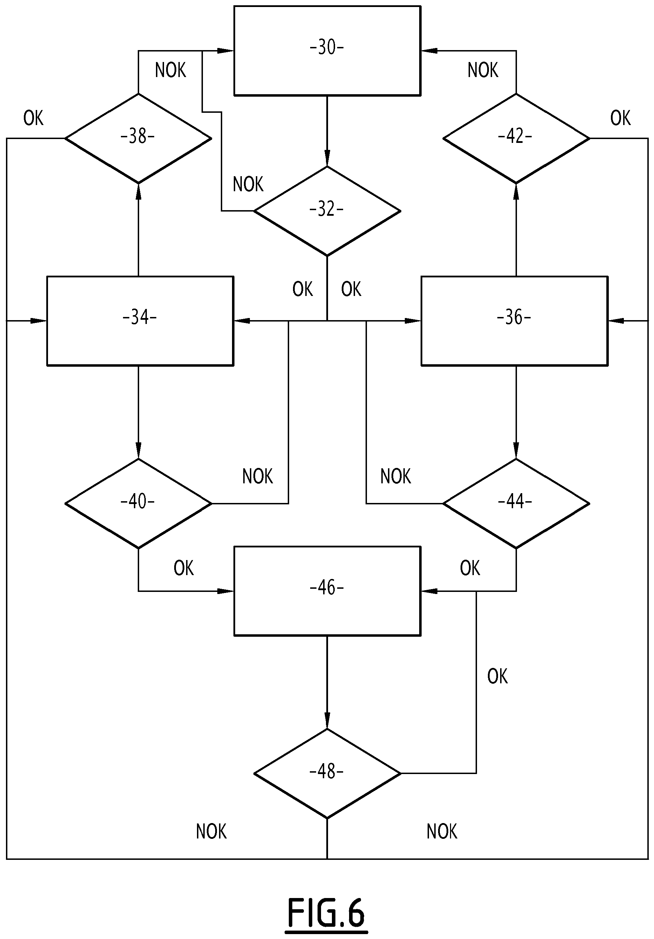

La figure 6 illustre un ordinogramme d'un exemple de mise en œuvre du procédé de contrôle.

Initialement, le réseau de communication 10 est mis dans l'état correspondant au premier mode d'émission ME1 dans lequel la source transmet 0.5 message/slot à travers le premier R1 uniquement (voir rectangle 30 dans la figure 6).

A l'aide des niveaux de puissance estimés, chaque relais R1 ou R2 estime la zone Z1, Z2 ou Z3 dans laquelle ledit relais R1 ou R2 se situe, et donc sa capacité à recevoir un paquet provenant de la source S si le relais complémentaire R1 ou R2 est actif (voir le losange 32 sur la figure 6).

Par exemple, en référence au rectangle 34 sur la figure 6, si le premier relais R1 peut effectivement recevoir un message de la source S pendant que le deuxième relais R2 est actif (le premier relais R1 se situe alors dans la première zone Z1 ou la deuxième zone Z2), le premier relais R1 en informe la source S. Cette information est contenue dans les messages de configuration transmis périodiquement par le premier relais R1. Alors, la source S qui a connaissance des capacités de décodage du premier relais R1 fait passer le réseau de communication S dans le deuxième mode d'émission ME2 et impose l'ordonnancement des transmissions correspondant. Ce nouveau mode d'émission ME2 est annoncé aux relais R1 et R2 dans les messages de configuration transmis périodiquement par la source S. Alors, les relais R1 et R2 peuvent adopter l'ordonnancement adéquat.

Similairement, en référence au rectangle 36 sur la figure 6, si le deuxième relais R2 peut recevoir un message de la source pendant que le premier relais R1 transmet à la destination (le deuxième relais R2 se situe alors dans la première zone Z1 ou dans la deuxième zone Z2), le deuxième relais R2 en informe la source S. Cette information est contenue dans les messages de configuration transmis périodiquement par le deuxième relais R2. Alors, la source S qui a connaissance des capacités de décodage du deuxième relais R2 fait passer le réseau dans le deuxième-bis mode d'émission ME2-bis et impose l'ordonnancement des transmissions correspondant. Ce nouveau mode d'émission ME2-bis est annoncé aux relais R1 et R2 dans les messages de configuration transmis périodiquement par la source S.

Si aucun des deux relais R1 ou R2 ne peut simultanément recevoir un message émis par la source S pendant que l'autre relais R1 ou R2 transmet un message à la destination D (les deux relais R1 ou R2 se situent dans la troisième zone Z3), le réseau de communication 10 reste dans le premier mode d'émission ME1.

Dans le dernier cas correspondant notamment aux éléments 40, 44, 46 et 48 de la figure 6, les deux relais R1 et R2 peuvent tous les deux recevoir un message émis par la source S pendant que le relais complémentaire R1 ou R2 transmet un message à la destination (les deux relais R1 et R2 se situent tous les deux dans la première zone Z1 ou dans la deuxième zone Z2). La source S qui prend connaissance des capacités des deux relais R1 et R2 grâce aux messages de configuration transmis périodiquement par les deux relais R1 et R2 change alors de mode d'émission et adopte le troisième mode d'émission ME3 pour bénéficier du meilleur débit possible.

Un tel procédé permet d'augmenter le débit du réseau de communication 10 de manière dynamique.

Inversement, lorsque les relais R1 et R2 estiment ne plus être capables de décoder le message de la source S quand le relais complémentaire R1 ou R2 transmet simultanément à la destination D (relais R1 ou R2 en troisième zone Z3), les relais R1 et R2 en informent la source S. La source S bascule alors dans un mode d'émission ayant un débit plus faible.

Par exemple, si le mode d'émission est le troisième mode d'émission ME3 et que le deuxième relais R2 informe la source S que le deuxième relais R2 n'est plus capable de décoder les paquets de la source S pendant que le premier relais R1 est actif, alors la source S bascule dans le deuxième mode d'émission ME2 et impose aux relais R1 et R2 l'ordonnancement des transmissions correspondantes.

Un tel procédé permet de réduire le débit du réseau de communication 10 de manière dynamique.

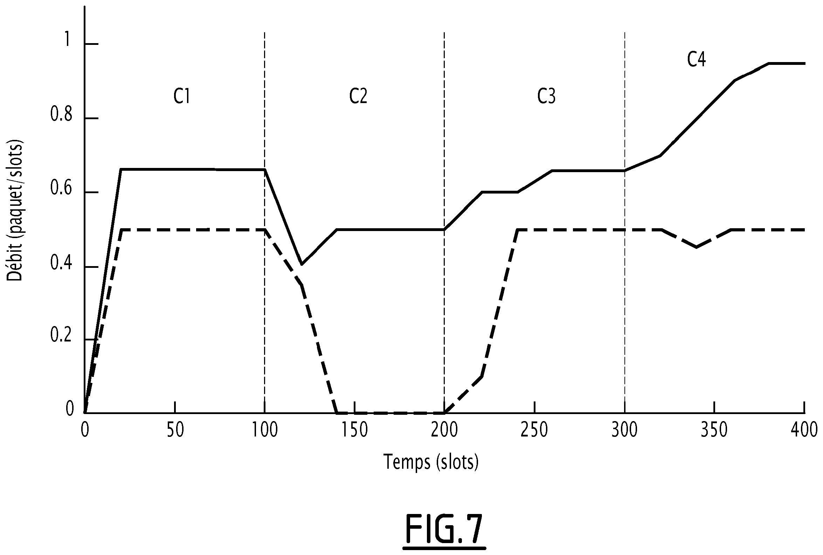

Cette capacité est notamment montrée sur la figure 7 dans laquelle est comparé le débit pour un procédé de relais classique et le procédé précédemment décrit.

Les tests ont été effectués dans quatre configurations C1 à C4 successives : une première configuration C1 dans laquelle le mode d'émission adopté est le deuxième mode d'émission ME2, une deuxième configuration C2 correspondant à une extinction du premier relais R1, une troisième configuration C3 correspondant à une réactivation du premier relais R1 et une quatrième configuration C4 dans laquelle le mode d'émission adopté est le troisième mode d'émission ME3

Il apparaît que le débit du réseau de communication 10 est augmenté de 40 à 90% en utilisant le procédé de contrôle proposé.

En outre, le graphique de la figure 7 met aussi en évidence la bonne résilience du procédé de contrôle, celui-ci s'adaptant mieux aux changements de configuration.

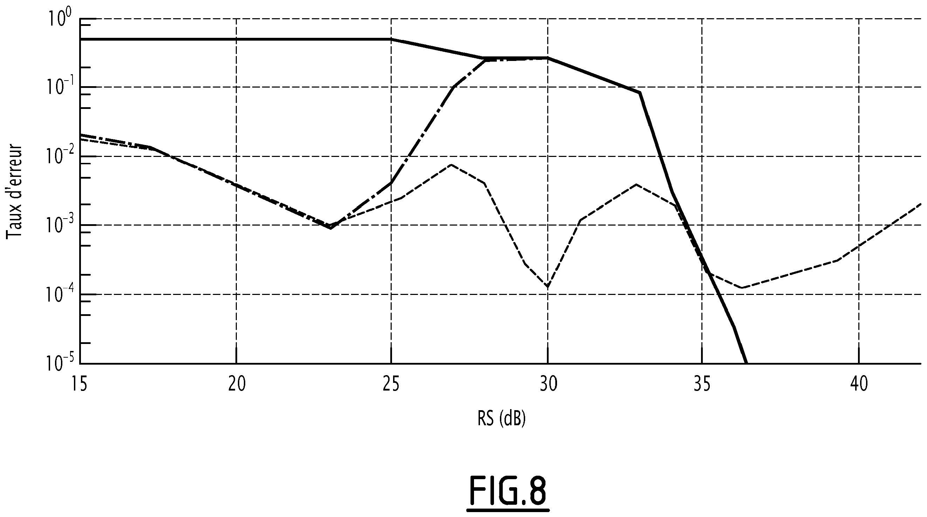

Selon un mode de réalisation avantageux, comme illustré par la figure 8, le taux d'erreur de bit (aussi désigné par le terme anglais de « Bit Error Rate ») obtenu par utilisation du procédé de contrôle est amélioré par un contrôle de la puissance émise par la source S.

Pour cela, quand un relais R1 ou R2 se situe dans la deuxième zone Z2, ledit relais R1 ou R2 demande à la source S de réduire sa puissance afin que les puissances que ledit relais R1 ou R2 reçoit soient telles que ce relais R1 ou R2 se trouve sur un minimum local du taux d'erreur de bit quand le décodage PLNC est effectué.

En effet, la Figure 8 montre que les performances du décodage PLNC sont meilleures quand la différence des deux signaux qui interfèrent est nulle ou égale à -7dB. Dans un tel cas, les relais R1 et R2 qui adoptent un décodage PLNC demandent à la source S (dans les messages de configuration) une réduction de la puissance afin de se placer dans de telles conditions. Alors, quand la source S transmet un paquet de donnée à un relais R1 ou R2, la source S réduit sa puissance de la valeur (en dB) demandée par le relais R1 ou R2.

La figure 8 montre aussi que le choix du décodage PLNC (courbe pointillés) est particulièrement avantageux par rapport à des techniques de décodage connues comme l'IF (courbe en traits pleins) et le SIC (courbe en traits mixtes) quand les deux signaux qui interfèrent sont reçus à des puissances proches.

Dans chacun des cas proposés, le procédé de contrôle du fonctionnement d'un réseau de communication 10 permet une augmentation du débit tout en garantissant une bonne réception des messages.

D'autres modes de réalisation sont envisageables par combinaison des modes de réalisations précédents lorsque cela est techniquement possible. La portée de l'invention présente est définie par les revendications annexées.

## Revendications

1. Procédé de contrôle du fonctionnement d'un réseau de communication (10), le réseau comportant une source (S) reliée par deux relais (R1, R2) à un nœud de destination (D), le fonctionnement étant défini par un mode d'émission (ME1, ME2, ME3) du réseau de communication (10) et un mode de réception (MR1, MR2, MR3) pour chaque relais (R1, R2), le procédé comportant :
- la détection du mode de réception (MR1, MR2, MR3) de chaque relais (R1, R2) du réseau de communication (10), le mode de réception (MR1, MR2, MR3) d'un relais (R1, R2) étant :
- un premier mode de réception (MR1) dans lequel le relais (R1, R2) considéré est propre à recevoir des messages provenant de la source sans mise en œuvre d'une technique de gestion des interférences, ou
- un deuxième mode de réception (MR2) dans lequel le relais (R1, R2) considéré est propre à recevoir les messages provenant de la source après mise en œuvre d'une technique de gestion des interférences, ou
- un troisième mode de réception (MR3) dans lequel le relais (R1, R2) considéré n'est pas propre à recevoir des messages provenant de la source même après mise en œuvre d'une technique de gestion des interférences, et
- le contrôle du mode d'émission (ME1, ME2, ME2-bis, ME3) du réseau de communication (10) en fonction du mode de réception (MR1, MR2, MR3) détecté pour chacun des deux relais (R1, R2).

2. Procédé de contrôle selon la revendication 1, dans lequel la détection du mode de réception de chaque relais (MR1, MR2, MR3) est obtenue à l'aide d'au moins une mesure de rapport signal à bruit.

3. Procédé de contrôle selon la revendication 2, dans lequel la mesure de rapport signal à bruit est un rapport signal à bruit entre un signal provenant de la source (S) et le bruit d'un relais ou un rapport signal à bruit entre un signal provenant d'un relais (R1, R2) et le bruit d'un autre relais (R1, R2).

4. Procédé de contrôle selon l'une quelconque des revendications 1 à 3, dans lequel le procédé comporte une étape de prise de connaissance par la source (S) des modes de réception (MR1, MR2, MR3) des deux relais (R1, R2).

5. Procédé de contrôle selon l'une quelconque des revendications 1 à 4, dans lequel la technique de gestion des interférences est un décodage PLNC, PNLC signifiant « Physical Layer Network Coding ».

6. Procédé de contrôle selon la revendication 5, dans lequel le procédé comporte l'adaptation de la puissance de la source (S) lorsque le mode de réception (MR1, MR2, MR3) est le deuxième mode de réception (MR2).

7. Procédé de contrôle selon l'une quelconque des revendications 1 à 6, dans lequel lors de l'étape de contrôle, le mode d'émission (ME1, ME2, ME2-bis,ME3) du réseau de communication (10) présente un débit de 1 trame par slot lorsque le réseau de communication (10) est dans le troisième mode d'émission (ME3) et le réseau de communication (10) présente un débit de 2/3 d'une trame par slot lorsque le réseau de communication (10) est dans le deuxième mode d'émission (ME2, ME2-bis).

8. Réseau de communication (10) comportant :
- une source (S),
- un nœud de destination (D),
- deux relais (R1, R2) reliant la source (S) au nœud de destination (D), et
- quatre contrôleurs (18), chaque contrôleur (18) étant associé respectivement à la source (S), au nœud de destination (D) et aux deux relais (R1, R2), les quatre contrôleurs (18) étant adaptés à :
- contrôler le fonctionnement du réseau de communication (10), le fonctionnement étant défini par un mode d'émission (ME1, ME2, ME3) pour le réseau de communication (10) et un mode de réception (MR1, MR2, MR3) pour chaque relais (R1, R2),
- détecter le mode de réception (MR1, MR2, MR3) de chaque relais (R1, R2) du réseau de communication (10), le mode de réception (MR1, MR2, MR3) d'un relais (R1, R2) étant :
- un premier mode de réception (MR1) dans lequel le relais (R1, R2) considéré est propre à recevoir des messages provenant de la source sans mise en œuvre d'une technique de gestion des interférences, ou
- un deuxième mode de réception (MR2) dans lequel le relais (R1, R2) considéré est propre à recevoir des messages provenant de la source après mise en œuvre d'une technique de gestion des interférences, ou
- un troisième mode de réception (MR3) dans lequel le relais (R1, R2) considéré n'est pas propre à recevoir des messages provenant de la source même après mise en œuvre d'une technique de gestion des interférences, et
- contrôler le mode d'émission (ME1, ME2, ME3) du réseau de communication (10) en fonction du mode de réception (MR1, MR2, MR3) détecté pour chacun des deux relais (R1, R2).

9. Produit programme d'ordinateur comportant des instructions qui, lorsque le programme d'ordinateur est exécuté par une unité de traitement de données, conduisent celle-ci à mettre œuvre les étapes du procédé selon l'une quelconque des revendications 1 à 7.

10. Support lisible d'informations comportant des instructions de programme formant un programme d'ordinateur, le programme d'ordinateur étant chargeable sur une unité de traitement de données et adapté pour entraîner la mise en œuvre des étapes du procédé selon l'une quelconque des revendications 1 à 7 lorsque le programme d'ordinateur est mis en œuvre sur l'unité de traitement de données.

## Patentansprüche

1. Steuerverfahren des Betriebs eines Kommunikationsnetzes (10), das Netz umfassend eine Quelle (S), die über zwei Relais (R1, R2) mit einem Zielknoten (D) verbunden ist, wobei der Betrieb durch einen Sendemodus (ME1, ME2, ME3) des Kommunikationsnetzes (10) und einen Empfangsmodus (MR1, MR2, MR3) für jedes Relais (R1, R2) definiert ist, das Verfahren umfassend:
- Erfassen des Empfangsmodus (MR1, MR2, MR3) von jedem Relais (R1, R2) des Kommunikationsnetzes (10), wobei der Empfangsmodus (MR1, MR2, MR3) eines Relais (R1, R2) wie folgt ist:
- ein erster Empfangsmodus (MR1), in dem das betrachtete Relais (R1, R2) geeignet ist, um Nachrichten von der Quelle zu empfangen, ohne eine Technik zur Verwaltung von Interferenzen zu implementieren, oder
- ein zweiter Empfangsmodus (MR2), in dem das betrachtete Relais (R1, R2) geeignet ist, um die Nachrichten von der Quelle zu empfangen, nachdem eine Technik zur Verwaltung von Interferenzen implementiert wurde, oder
- ein dritter Empfangsmodus (MR3), in dem das betrachtete Relais (R1, R2) nicht geeignet ist, um Nachrichten von der Quelle zu empfangen, nachdem eine Technik zur Verwaltung von Interferenzen implementiert wurde, und
- Steuern des Sendemodus (ME1, ME2, ME2-bis, ME3) des Kommunikationsnetzes (10) abhängig von dem Empfangsmodus (MR1, MR2, MR3), der für jedes der zwei Relais (R1, R2) erfasst wurde.

2. Prüfverfahren nach Anspruch 1, wobei das Erfassen des Empfangsmodus von jedem Relais (MR1, MR2, MR3) mittels mindestens einer Messung von Signal-Rausch-Verhältnis erlangt wird.

3. Prüfverfahren nach Anspruch 2, wobei die Messung des Signal-Rausch-Verhältnisses ein Signal-Rausch-Verhältnis zwischen einem Signal von der Quelle (S) und dem Rauschen eines Relais oder ein Signal-Rausch-Verhältnis zwischen einem Signal von einem Relais (R1, R2) und dem Rauschen eines anderen Relais (R1, R2) ist.

4. Steuerverfahren nach einem der Ansprüche 1 bis 3, wobei das Verfahren einen Schritt einer Kenntnisnahme von Empfangsmodi (MR1, MR2, MR3) der zwei Relais (R1, R2) durch die Quelle (S) umfasst.

5. Steuerverfahren nach einem der Ansprüche 1 bis 4, wobei die Technik zur Verwaltung von Interferenzen eine PLNC-Decodierung ist, wobei PNLC "Physical Layer Network Coding" bedeutet.

6. Steuerverfahren nach Anspruch 5, wobei das Verfahren das Anpassen der Leistung der Quelle (S) umfasst, wenn der Empfangsmodus (MR1, MR2, MR3) der zweite Empfangsmodus (MR2) ist.

7. Prüfverfahren nach einem der Ansprüche 1 bis 6, wobei während des Prüfschritts der Sendemodus (ME1, ME2, ME2-bis, ME3) des Kommunikationsnetzes (10) eine Rate von 1 Frame pro Slot aufweist, wenn das Kommunikationsnetz (10) in dem dritten Sendemodus (ME3) ist, und das Kommunikationsnetz (10) eine Rate von 2/3 eines Frames pro Slot aufweist, wenn das Kommunikationsnetz (10) in dem zweiten Sendemodus (ME2, ME2-bis) ist.

8. Kommunikationsnetz (10), umfassend:
- eine Quelle (S),
- einen Zielknoten (D),
- zwei Relais (R1, R2), die die Quelle (S) mit dem Zielknoten (D) verbinden, und
- vier Steuerungen (18), wobei jede Steuerung (18) jeweils mit der Quelle (S), dem Zielknoten (D) und den beiden Relais (R1, R2) verbunden ist, wobei die vier Steuerungen (18) zu Folgendem angepasst sind:
- Steuern des Betriebs des Kommunikationsnetzes (10), wobei der Betrieb durch einen Sendemodus (ME1, ME2, ME3) für das Kommunikationsnetz (10) und einen Empfangsmodus (MR1, MR2, MR3) für jedes Relais (R1, R2) definiert ist,
- - Erfassen des Empfangsmodus (MR1, MR2, MR3) von jedem Relais (R1, R2) des Kommunikationsnetzes (10), wobei der Empfangsmodus (MR1, MR2, MR3) eines Relais (R1, R2) wie folgt ist:
- ein erster Empfangsmodus (MR1), in dem das betrachtete Relais (R1, R2) geeignet ist, um Nachrichten von der Quelle zu empfangen, ohne eine Technik zur Verwaltung von Interferenzen zu implementieren, oder
- ein zweiter Empfangsmodus (MR2), in dem das betrachtete Relais (R1, R2) geeignet ist, um Nachrichten von der Quelle zu empfangen, nachdem eine Technik zur Verwaltung von Interferenzen implementiert wurde, oder
- ein dritter Empfangsmodus (MR3), in dem das betrachtete Relais (R1, R2) nicht geeignet ist, um Nachrichten von der Quelle zu empfangen, nachdem eine Technik zur Verwaltung von Interferenzen implementiert wurde, und
- Steuern des Sendemodus (ME1, ME2, ME3) des Kommunikationsnetzes (10) abhängig von dem Empfangsmodus (MR1, MR2, MR3), der für jedes der zwei Relais (R1, R2) erfasst wurde.

9. Computerprogrammprodukt, umfassend Anweisungen, die, wenn das Computerprogramm von einer Datenverarbeitungseinheit ausgeführt wird, diese dazu veranlassen, die Schritte des Verfahrens nach einem der Ansprüche 1 bis 7 auszuführen.

10. Lesbarer Informationsträger, umfassend Programmanweisungen, die ein Computerprogramm bilden, wobei das Computerprogramm auf eine Datenverarbeitungseinheit geladen werden kann und angepasst ist, um die Durchführung der Schritte des Verfahrens nach einem der Ansprüche 1 bis 7 zu bewirken, wenn das Computerprogramm auf der Datenverarbeitungseinheit ausgeführt wird.

## Claims

1. A method for controlling the operation of the communication network (10), the method including a source (S) connected by two relays (R1, R2) to a destination node (D), the operation being defined by a sending mode (ME1, ME2, ME3) and a receiving mode (MR1, MR2, MR3) for each relay (R1, R2), the method including:
- the detection of the reception mode (MR1, MR2, MR3) of each relay (R1, R2) of the communication network (10), the reception mode (MR1, MR2, MR3) of a relay (R1, R2) being:
- a first reception mode (MR1) in which the considered relay (R1, R2) is capable of receiving messages coming from the source without implementing an interference management technique, or
- a second reception mode (MR2) in which the considered relay (R1, R2) is capable of receiving the messages coming from the source after implementing an interference management technique, or
- a third reception mode (MR3) in which the considered relay (R1, R2) is not capable of receiving messages coming from the source even after implementing an interference management technique, and
- controlling the sending mode (ME1, ME2, ME2-bis, ME3) of the communication network (10) as a function of the reception mode (MR1, MR2, MR3) detected for each of the two relays (R1, R2).

2. The control method according to claim 1, wherein the detection of the reception mode of each relay (MR1, MR2, MR3) is obtained using at least one signal-to-noise ratio measurement.

3. The control method according to claim 2, wherein the signal-to-noise ratio measurement is a signal-to-noise ratio between a signal coming from the source (S) and the noise of a relay or a signal-to-noise ratio between a signal coming from a relay (R1, R2) and the noise of another relay (R1, R2).

4. The control method according to any one of claims 1 to 3, wherein the method includes a step for the source (S) to learn the reception modes (MR1, MR2, MR3) of the two relays (R1, R2).

5. The control method according to any one of claims 1 to 4, wherein the interference management technique is a PLNC decoding, PLNC meaning "Physical Layer Coding Network".

6. The control method according to claim 5, wherein the method includes the adaptation of the power of the source (S) when the reception mode (MR1, MR2, MR3) is the second reception mode (MR2).

7. The control method according to any one of claims 1 to 6, wherein during the control step, the sending mode (ME1, ME2, ME2-bis, ME3) of the communication network (10) has a throughput of 1 frame per slot when the communication network (10) is in the third sending mode (ME3) and the communication network (10) has a throughput of 2/3 of a frame per slot when the communication network (10) is in the second sending mode (ME2, ME2-bis).

8. A communication network (10) including:
- a source (S),
- a destination node (D),
- two relays (R1, R2) connecting the source (S) to the destination node (D), and
- four controllers (18), each controller (18) respectively being associated with the source (S), the destination node (D) and the two relays (R1, R2), the four controllers (18) being suitable for:
- controlling the operation of the communication network (10), the operation being defined by a sending mode (ME1, ME2, ME3) for the communication network (10) and a reception mode (MR1, MR2, MR3) for each relay (R1, R2),
- detecting the reception mode (MR1, MR2, MR3) of each relay (R1, R2) of the communication network (10), the reception mode (MR1, MR2, MR3) of a relay (R1, R2) being:
- a first reception mode (MR1) in which the considered relay (R1, R2) is capable of receiving messages coming from the source without implementing an interference management technique, or
- a second reception mode (MR2) in which the considered relay (R1, R2) is capable of receiving messages coming from the source after implementing an interference management technique, or
- a third reception mode (MR3) in which the considered relay (R1, R2) is not capable of receiving messages coming from the source even after implementing an interference management technique, and
- controlling the sending mode (ME1, ME2, ME3) of the communication network (10) as a function of the reception mode (MR1, MR2, MR3) detected for each of the two relays (R1, R2).

9. A computer program product including instructions which, when the computer program is executed by a data processing unit, conducts the data processing unit to implement the steps of a method according to any one of claims 1 to 7.

10. A readable information medium comprising program instructions forming program product, the computer program being able to be loaded on a data processing unit and suitable for driving the implementation of steps of the method according to any one of claims 1 to 7 when the computer program is implemented on the data processing unit.
